(19)

Europäisches Patentamt

European Patent Office

Office européen des brevets

(11)    **EP 4 703 881 A1**

(12)    **EUROPEAN PATENT APPLICATION**

(43) Date of publication:
    **04.03.2026   Bulletin 2026/10**

(21) Application number: **25179538.1**

(22) Date of filing: **28.05.2025**

(51) International Patent Classification (IPC):
    ***G06F 9/50*** *(2006.01)*      ***G06F 9/455*** *(2018.01)*
    ***G06F 8/60*** *(2018.01)*

(52) Cooperative Patent Classification (CPC):
    **G06F 9/5072; G06F 8/60; G06F 9/45558;**
    **G06F 9/5077;** G06F 2009/4557

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH LA MA MD TN**

(30) Priority:   **26.08.2024   CN 202411179676**

(71) Applicant: **Beijing Volcano Engine Technology**
    **Co., Ltd.**
    **Beijing 100190 (CN)**

(72) Inventors:
    • **SUN, Rongxin**
      **Beijing, 100028 (CN)**
    • **CHEN, Xi**
      **Beijing, 100028 (CN)**

(74) Representative: **Grünecker Patent- und**
    **Rechtsanwälte**
    **PartG mbB**
    **Leopoldstraße 4**
    **80802 München (DE)**

(54)    **RESOURCE SCHEDULING METHOD BASED ON A CLOUD SERVICE PLATFORM AND ELECTRONIC DEVICE**

(57)    A resource scheduling method based on a cloud service platform, an electronic device, and a non-transitory computer-readable storage medium are provided. The method includes: acquiring deployment attribute information of a to-be-scheduled virtual machine that is applied for deployment by a tenant on a cloud service platform; acquiring a target virtual machine profile matching the deployment attribute information of the to-be-scheduled virtual machine from a virtual machine profile set of the cloud service platform, the virtual machine profile is used to describe deployment attribute information and resource consumption information corresponding to a virtual machine, and the resource consumption information is used to describe an expected consumption of at least one resource of a virtual machine matching the deployment attribute information of the virtual machine; and scheduling the to-be-scheduled virtual machine according to the resource consumption information in the target virtual machine profile.

**EP 4 703 881 A1**

**Description**

CROSS-REFERENCE TO RELATED APPLICATION(S)

This application claims the priority to and benefits of Chinese Patent Application, No.202411179676.1, which was filed on August 26, 2024. The aforementioned patent application is hereby incorporated by reference in its entirety.

TECHNICAL FIELD

The present disclosure relates to the technical field of virtualization, in particular to a resource scheduling method based on a cloud service platform and an electronic device.

BACKGROUND

Infrastructure as a Service (IaaS) is a cloud computing service model. In this model, a cloud service provider provides users with infrastructure services such as servers, storage, and networks. Users can rent these resources as needed without purchasing and maintaining hardware devices, which greatly saves costs and at the same time greatly improves flexibility.

In an IaaS environment, high load stacking usually means that multiple tenants or applications with high resource requirements are centrally running on the same physical resource (such as a server), resulting in resource contention and performance degradation. Therefore, how to improve resource scheduling to improve resource utilization ratio and reduce resource overhead costs, so as to meet the resource requirements of multiple tenants while reducing resource contention among multiple tenants.

SUMMARY

In view of this, embodiments of the present disclosure provide a resource scheduling method based on a cloud service platform and an electronic device, which are used to improve resource scheduling, improve resource utilization ratio, and reduce resource costs, so as to meet the resource requirements of multiple tenants while reducing resource contention among multiple tenants.

In order to achieve the above objective, the embodiments of the present disclosure provide the following technical solutions:

In a first aspect, an embodiment of the present disclosure provides a resource scheduling method based on a cloud service platform, including:

acquiring deployment attribute information of a to-be-scheduled virtual machine that is applied for deployment by a tenant on a cloud service platform;

acquiring a target virtual machine profile matching the deployment attribute information of the to-be-scheduled virtual machine from a virtual machine profile set of the cloud service platform; the virtual machine profile set includes a plurality of virtual machine profiles generated based on historical operation data of virtual machines on the cloud service platform; the virtual machine profile is used to describe deployment attribute information and resource consumption information corresponding to a virtual machine; the resource consumption information is used to describe an expected consumption of at least one resource of a virtual machine matching the deployment attribute information of the virtual machine; and

scheduling the to-be-scheduled virtual machine according to resource consumption information in the target virtual machine profile.

As an optional implementation of the embodiment of the present disclosure, the scheduling the to-be-scheduled virtual machine according to the resource consumption information in the target virtual machine profile includes:

acquiring an expected resource consumption of the to-be-scheduled virtual machine according to the resource consumption information in the target virtual machine profile;

acquiring a resource remaining quantity of each host in a host cluster of the cloud service platform, where the resource remaining quantity includes a quantity of the at least one resource that is idle on the host; and

scheduling the to-be-scheduled virtual machine to a target host, a resource remaining quantity of the target host being greater than or equal to the expected resource consumption in the host cluster.

As an optional implementation of the embodiment of the present disclosure, after the scheduling the to-be-scheduled virtual machine to the target host and the resource remaining quantity of the target host being greater than or equal to the expected resource consumption in the host cluster, the method further includes:
updating the resource remaining quantity of the target host according to the expected resource consumption.

As an optional implementation of the embodiment of the present disclosure, the at least one resource includes a virtual processor; and the method further includes:

acquiring usage information of a virtual processor of a target virtual machine from the historical operation data, the target virtual machine is a virtual machine matching the deployment attribute information of the to-be-scheduled virtual machine, and the usage information includes at least one indicator used to describe a utilization ratio of the virtual processor;

acquiring an expected utilization ratio of a virtual processor of a virtual machine matching the deployment attribute information of the virtual machine according to the usage information of the virtual processor of the target virtual machine; and

generating the target virtual machine profile according to the expected utilization ratio of the virtual processor of the virtual machine matching the deployment attribute information of the virtual machine.

As an optional implementation of the embodiment of the present disclosure, the usage information includes an average utilization ratio, a first utilization ratio, and a second utilization ratio of the virtual processor; the first utilization ratio and the second utilization ratio are a first percentile and a second percentile of the utilization ratio of the virtual processor of the target virtual machine, respectively; and the first percentile is less than the second percentile; and the acquiring the expected utilization ratio of the virtual processor of the virtual machine matching the deployment attribute information of the virtual machine according to the usage information of the virtual processor of the target virtual machine includes:

calculating a difference between the first utilization ratio and the average utilization ratio to acquire a first load amplitude;

calculating a difference between the second utilization ratio and the average utilization ratio to acquire a second load amplitude; and

according to the first load amplitude and the second load amplitude, acquiring the expected utilization ratio of the virtual processor of the virtual machine matching the deployment attribute information of the virtual machine based on the average utilization ratio or the first utilization ratio or the second utilization ratio .

As an optional implementation of the embodiment of the present disclosure, the according to the first load amplitude and the second load amplitude, acquiring the expected utilization ratio of the virtual processor of the virtual machine matching the deployment attribute information of the virtual machine based on the average utilization ratio or the first utilization ratio or the second utilization ratio includes:

acquiring, in response to that the second load amplitude is less than or equal to a preset threshold, the expected utilization ratio of the virtual processor of the virtual machine matching the deployment attribute information of the virtual machine based on the average utilization ratio;

acquiring, in response to that the second load amplitude is greater than the preset threshold and the first load amplitude is less than or equal to the preset threshold, the expected utilization ratio of the virtual processor of the virtual machine matching the deployment attribute information of the virtual machine based on the first utilization ratio; and

acquiring, in response to that the first load amplitude is greater than the preset threshold, the expected utilization ratio of the virtual processor of the virtual machine matching the deployment attribute information of the virtual machine based on the second utilization ratio.

As an optional implementation of the embodiment of the present disclosure, the acquiring the expected resource consumption of the to-be-scheduled virtual machine according to the resource consumption information in the target virtual machine profile includes:

acquiring an expected virtual processor utilization ratio of the to-be-scheduled virtual machine according to the resource consumption information in the target virtual machine profile; and

acquiring an expected virtual processor consumption of the to-be-scheduled virtual machine according to the number of virtual processors of the to-be-scheduled virtual machine and the expected virtual processor utilization ratio of the to-be-scheduled virtual machine.

As an optional implementation of the embodiment of the present disclosure, the at least one resource includes a virtual processor; and before acquiring the resource remaining quantity of each host in the host cluster of the cloud service platform, the method further includes:

acquiring the number of virtual processors of each host in the host cluster;
acquiring a total number of available virtual processors of each host in the host cluster according to the number of virtual processors of each host in the host cluster and a preset virtual processor utilization ratio; and
acquiring an initial value of a virtual processor remaining quantity of each host in the host cluster according to the total number of available virtual processors of each host in the host cluster.

As an optional implementation of the embodiment of the present disclosure, the acquiring the target virtual machine profile matching the deployment attribute information of the to-be-scheduled virtual machine from the virtual machine profile set of the cloud service platform includes:

acquiring a hash value of the to-be-scheduled virtual machine according to the deployment attribute information of the to-be-scheduled virtual machine;
acquiring a hash value of each virtual machine profile in the virtual machine profile set according to the deployment attribute information of each virtual machine profile in the virtual machine profile set; and
determining a virtual machine profile, having the same hash value as the hash value of the to-be-scheduled virtual machine, as the target virtual machine profile.

As an optional implementation of the embodiment of the present disclosure, the method further includes:

blurring the deployment attribute information of the to-be-scheduled virtual machine, before acquiring the hash value of the to-be-scheduled virtual machine according to the deployment attribute information of the to-be-scheduled virtual machine; and
blurring the deployment attribute information of each virtual machine profile in the virtual machine profile set, before acquiring the hash value of each virtual machine profile in the virtual machine profile set according to the deployment attribute information of each virtual machine profile in the virtual machine profile set.

In a second aspect, an embodiment of the present disclosure provides a resource scheduling apparatus based on a cloud service platform, including:

an acquisition unit, configured to acquire deployment attribute information of a to-be-scheduled virtual machine that is applied for deployment by a tenant on a cloud service platform;
a matching unit, configured to acquire a target virtual machine profile matching the deployment attribute information of the to-be-scheduled virtual machine from a virtual machine profile set of the cloud service platform; the virtual machine profile set includes a plurality of virtual machine profiles generated based on historical operation data of virtual machines on the cloud service platform; the virtual machine profile is used to describe deployment attribute information and resource consumption information corresponding to a virtual machine; the resource consumption information is used to describe an expected consumption of at least one resource of a virtual machine matching the deployment attribute information of the virtual machine; and
a scheduling unit, configured to schedule the to-be-scheduled virtual machine according to resource consumption information in the target virtual machine profile.

As an optional implementation of the embodiment of the present disclosure, the scheduling unit is further configured to: acquire an expected resource consumption of the to-be-scheduled virtual machine according to the resource consumption information in the target virtual machine profile; acquire a resource remaining quantity of each host in a host cluster of the cloud service platform, the resource remaining quantity includes a quantity of the at least one resource that is idle on the host; and schedule the to-be-scheduled virtual machine to a target host, a resource remaining quantity of the target host being greater than or equal to the expected resource consumption in the host cluster.

As an optional implementation of the embodiment of the present disclosure, the scheduling unit is further configured to: update the resource remaining quantity of the target host according to the expected resource consumption, after scheduling the to-be-scheduled virtual machine to the target host with the resource remaining quantity being greater than or equal to the expected resource consumption in the host cluster.

As an optional implementation of the embodiment of the present disclosure, the at least one resource includes a virtual processor, and the matching unit is further configured to: acquire usage information of a virtual processor of a target virtual machine from the historical operation data; acquire an expected utilization ratio of a virtual processor of a virtual machine matching the deployment attribute information of the virtual machine according to the usage information of the virtual processor of the target virtual machine; and generate the target virtual machine profile according to the expected utilization ratio of the virtual processor of the virtual machine matching the deployment attribute information of the virtual machine;

As an optional implementation of the embodiment of the present disclosure, the target virtual machine is a virtual machine matching the deployment attribute information of the to-be-scheduled virtual machine, and the usage information includes at least one indicator used to describe a utilization ratio of the virtual processor.

As an optional implementation of the embodiment of the present disclosure, the usage information includes an average utilization ratio, a first utilization ratio, and a second utilization ratio of the virtual processor, the first utilization ratio and the second utilization ratio are a first percentile and a second percentile of the utilization ratio of the virtual processor of the target virtual machine, respectively; and the first percentile is less than the second percentile; and

As an optional implementation of the embodiment of the present disclosure, the matching unit is further configured to: calculate a difference between the first utilization ratio and the average utilization ratio to acquire a first load amplitude; calculate a difference between the second utilization ratio and the average utilization ratio to acquire a second load amplitude; and according to the first load amplitude and the second load amplitude, acquire the expected utilization ratio of the virtual processor of the virtual machine matching the deployment attribute information of the virtual machine based on the average utilization ratio or the first utilization ratio or the second utilization ratio.

As an optional implementation of the embodiment of the present disclosure, the matching unit is further configured to: in response to that the second load amplitude is less than or equal to a preset threshold, acquire the expected utilization ratio of the virtual processor of the virtual machine matching the deployment attribute information of the virtual machine based on the average utilization ratio; in response to that the second load amplitude is greater than the preset threshold, and the first load amplitude is less than or equal to the preset threshold, acquire the expected utilization ratio of the virtual processor of the virtual machine matching the deployment attribute information of the virtual machine based on the first utilization ratio; and in response to that the first load amplitude is greater than the preset threshold, acquire the expected utilization ratio of the virtual processor of the virtual machine matching the deployment attribute information of the virtual machine based on the second utilization ratio.

As an optional implementation of the embodiment of the present disclosure, the scheduling unit is further configured to: acquire an expected virtual processor utilization ratio of the to-be-scheduled virtual machine according to the resource consumption information in the target virtual machine profile; and acquire an expected virtual processor consumption of the to-be-scheduled virtual machine according to the number of virtual processors of the to-be-scheduled virtual machine and the expected virtual processor utilization ratio of the to-be-scheduled virtual machine.

As an optional implementation of the embodiment of the present disclosure, the at least one resource includes a virtual processor, and the scheduling unit is further configured to acquire the number of virtual processors of each host in the host cluster of the cloud service platform before acquiring the resource remaining quantity of each host in the host cluster of the cloud service platform; acquire the total number of available virtual processors of each host in the host cluster according to the number of virtual processors of each host in the host cluster and a preset virtual processor utilization ratio; and acquire the initial value of the virtual processor remaining quantity of each host in the host cluster according to the total number of available virtual processors of each host in the host cluster.

As an optional implementation of the embodiment of the present disclosure, the matching unit is further configured to: acquire a hash value of the to-be-scheduled virtual machine according to the deployment attribute information of the to-be-scheduled virtual machine; acquire the hash value of each virtual machine profile in the virtual machine profile set according to the deployment attribute information of each virtual machine profile in the virtual machine profile set; and determine a virtual machine profile, having the same hash value as the hash value of the to-be-scheduled virtual machine, in the virtual machine profile set as the target virtual machine profile.

As an optional implementation of the embodiment of the present disclosure, the matching unit is further configured to: before acquiring the hash value of the to-be-scheduled virtual machine according to the deployment attribute information of the to-be-scheduled virtual machine, blur the deployment attribute information of the to-be-scheduled virtual machine; and before acquiring the hash value of each virtual machine profile in the virtual machine profile set according to the deployment attribute information of each virtual machine profile in the virtual machine profile set, blur the deployment attribute information of each virtual machine profile in the virtual machine profile set.

In a third aspect, an embodiment of the present disclosure provides an electronic device, including: a memory and a processor, the memory is configured to store a computer program, and the processor is configured to, when executing the computer program, cause the electronic device to implement the resource scheduling method based on the cloud service platform according to any one of the above implementations.

In a fourth aspect, an embodiment of the present disclosure provides a non-transitory computer-readable storage medium, on which a computer program is stored, the computer program is configured to enable a computing device to implement any one of the above resource scheduling methods based on the cloud service platform.

The resource scheduling method based on a cloud service platform provided by the embodiment of the present disclosure includes: firstly acquiring deployment attribute information of a to-be-scheduled virtual machine that is applied for deployment by a tenant on a cloud service platform, then acquiring a target virtual machine profile matching the deployment attribute information of the to-be-scheduled virtual machine from a virtual machine profile set of the cloud service platform, and scheduling the to-be-scheduled virtual machine according to resource consumption information in the target virtual machine profile. Because the embodiment of the present disclosure can generate a plurality of virtual machine profiles based on historical operation data of virtual machines on the cloud service platform, and the virtual machine profile is used to describe deployment attribute information and resource consumption information corresponding to a virtual machine, and the resource consumption information is used to describe an expected consumption of at least one resource of a virtual machine matching the deployment attribute information of the virtual machine, the present disclosure can acquire an expected resource consumption of the to-be-scheduled virtual machine according to the resource consumption information in the target virtual machine profile, and schedule the to-be-scheduled virtual machine according to the expected resource consumption of the to-be-scheduled virtual machine. Thus, in the embodiment of the present disclosure, virtual machines with high resource requirements can be avoided to be scheduled to the same host, thereby improving resource scheduling, improving resource utilization ratio, and reducing resource costs, so as to meet the resource requirements of multiple tenants while reducing resource contention among multiple tenants.

BRIEF DESCRIPTION OF DRAWINGS

The drawings here are incorporated into the specification and constitute a part of the specification. The drawings illustrate the embodiments in accordance with the present disclosure, and are used together with the specification to explain the principles of the present disclosure.

In order to more clearly illustrate the technical solutions in the embodiments of the present disclosure or in the prior art, the following will briefly introduce the drawings that need to be invoked in the description of the embodiments or the prior art. Obviously, for those of ordinary skill in the art, other drawings can also be obtained according to these drawings without creative effort.

Fig. 1 is a flowchart of a resource scheduling method based on a cloud service platform provided by an embodiment of the present disclosure;

Fig. 2 is a schematic diagram of a production link of a virtual machine profile provided by an embodiment of the present disclosure;

Fig. 3 is another flowchart of a resource scheduling method based on a cloud service platform provided by an embodiment of the present disclosure;

Fig. 4 is a schematic structural diagram of a resource scheduling apparatus based on a cloud service platform provided by an embodiment of the present disclosure; and

Fig. 5 is a schematic diagram of a hardware structure of an electronic device provided by an embodiment of the present disclosure.

DETAILED DESCRIPTION

In order to more clearly understand the above objectives, features, and advantages of the present disclosure, the solutions of the present disclosure will be further described below. It should be noted that, the embodiments of the present disclosure and the features in the embodiments can be combined with each other without conflict.

Many specific details are set forth in the following description to fully understand the present disclosure, but the present disclosure can also be implemented in other ways different from those described here. Obviously, the embodiments in the specification are only a part of the embodiments of the present disclosure, rather than all embodiments.

In the embodiments of the present disclosure, words such as "exemplary" or "for example" are used to represent examples, illustrations, or explanations. Any embodiment or design solution described as "exemplary" or "for example" in the embodiments of the present disclosure should not be interpreted as being more preferable or advantageous than other embodiments or design solutions. Rather, the words "exemplary" or "for example" are intended to present relevant concepts in a specific way. In addition, in the description of the embodiments of the present disclosure, unless otherwise specified, "multiple" means two or more.

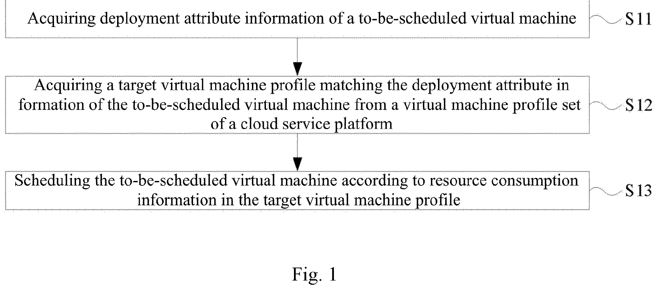

An embodiment of the present disclosure provides a resource scheduling method based on a cloud service platform. As shown in Fig. 1, the resource scheduling method based on the cloud service platform includes the following steps:

S11, acquiring deployment attribute information of a to-be-scheduled virtual machine.

In the embodiment of the present disclosure, the deployment attribute information of the to-be-scheduled virtual machine is information used to define deployment features of the to-be-scheduled virtual machine, and may include deployment attribute information in multiple dimensions.

In some embodiments, the deployment attribute information of the to-be-scheduled virtual machine may include at least one selected from the group consisting of: a Region of the to-be-scheduled virtual machine, an Availability Zone (AZ) of the to-be-scheduled virtual machine, an Instance ID of the to-be-scheduled virtual machine, an Instance Type of the to-be-scheduled virtual machine, an Account ID of the to-be-scheduled virtual machine, a specification family of the to-be-scheduled virtual machine, a specification of the to-be-scheduled virtual machine, and combinations thereof.

S12, acquiring a target virtual machine profile that matches the deployment attribute information of the to-be-scheduled virtual machine from a virtual machine profile set of a cloud service platform;

The virtual machine profile set includes multiple virtual machine profiles generated based on an analysis of historical operation data of virtual machines on the cloud service platform; and the virtual machine profile is used to describe deployment attribute information and resource consumption information corresponding to a virtual machine, the resource consumption information is used to describe an expected consumption of at least one resource of a virtual machine matching the deployment attribute information of the virtual machine.

Exemplarily, a certain virtual machine profile in the virtual machine profile set may be shown in Table 1 below:

Table 1 Virtual Machine Profile

| Classification | Hierarchy | Level | Name | Superior level | Example and description |
|---|---|---|---|---|---|
| Deployment attribute information | Raw data | First level | Region | / | Geographic regions divided by cloud computing service providers |
| Deployment attribute information | Raw data | Second level | Availability zone | Region | Smaller independent units that constitute a region |
| Deployment attribute information | Raw data | First level | Specification family | / | A group of virtual machine instance specification types with similar characteristics and performance metrics |
| Deployment attribute information | Raw data | Second level | Specification | Specification family | Specific configuration parameters of cloud server instances |
| Deployment attribute information | Raw data | First level | Instance name | / | A name used to identify a specific cloud server instance. For example, render-84-bj |
| Deployment attribute information | Raw data | Second level | Characteristics of the instance name | Instance name | Elements in the instance name that are used to describe and define some key attributes or characteristics of the instance name. For example: render |
| Resource consumption information | Raw data | First level | CPU utilization | / | The proportion of the time when the CPU is in the working state to the total time. For example: 83%, 62%. etc. |
| Resource consumption information | Real-time data | Second level | CPU load indicator | CPU utilization | An indicator of the CPU's busyness. For example: CPU average utilization, P50, P90, P99, etc. |
| Resource consumption information | Model data | Third level | CPU load level | CPU load indicator | The interval to which the CPU load indicator belongs, where the interval is obtained by dividing the range of the CPU load indicator into multiple non-overlapping parts |
| Resource consumption information | Model data | Third level | CPU load amplitude | CPU load indicator | The magnitude of the fluctuation of the CPU load within a period of time |
| Resource consumption information | Prediction data | Fourth level | CPU load stability | CPU load amplitude | The degree of drastic change of the CPU load within a period of time |

(continued)

| Classification | Hierarchy | Level | Name | Superior level | Example and description |
|---|---|---|---|---|---|
| Resource consumption information | Prediction data | Fourth level | CPU load expected level | CPU load amplitude CPU load level | The estimated interval to which the CPU load indicator belongs |

According to the content of the classification column in Table 1 above, it can be determined whether the information of the virtual machine profile belongs to the deployment attribute information or the resource consumption information, and the content in the column of hierarchy is used to provide the acquisition method of the information. The original data refers to the data directly read from the historical operation data of the virtual machine without data processing and aggregation. The real-time data refers to the objective factual results determined by counting and analyzing the historical operation data of the virtual machine. The model data indicates the indicators obtained by analyzing and modeling analysis according to the content of interest in the business scenario. The prediction data refers to the indicators obtained by inference and prediction based on the model data, which is an important basis for the virtual machine profile to divide the description objects.

It should be noted that in the above embodiment, the resource consumption information of the virtual machine profile is used to describe the expected utilization ratio of the CPU, and the expected utilization ratio of the CPU is represented in the form of an expected level of CPU load as an example, but the embodiment of the present disclosure is not limited thereto. The resource consumption information of the virtual machine profile may also indicate expected consumption of resources, such as a Graphics Processing Unit (GPU), memory, network transmission bandwidth, and the like, and the expected consumption may also be represented in other forms, which are not limited in the embodiment of the present disclosure.

In some embodiments, the resource scheduling method based on a cloud service platform provided by the above embodiment further includes: generating the target virtual machine profile, and adding the target virtual machine profile to the virtual machine profile set of the cloud service platform.

In some embodiments, the at least one resource includes a virtual processor. That is, the resource consumption information is used to describe a usage number of virtual processors of a virtual machine matching the deployment attribute information of the virtual machine. Exemplarily, the virtual processor may be a virtual central processing unit (VCPU), a virtual graphics processing unit (GPU), or the like.

In the case that the at least one resource includes the virtual processor, the generating the target virtual machine profile includes the following steps a to c:

Step a, acquiring usage information of a virtual processor of a target virtual machine from the historical operation data; The target virtual machine is a virtual machine matching the deployment attribute information of the to-be-scheduled virtual machine, and the usage information includes at least one indicator used to describe a utilization ratio of the virtual processor.

Exemplarily, the usage information of the virtual processor of the target virtual machine may include at least one selected from the group consisting of: an average utilization ratio of the virtual processor of the target virtual machine, a P50 (50th percentile) of the utilization ratio of the virtual processor of the target virtual machine, a P90 (90th percentile) of the utilization ratio of the virtual processor of the target virtual machine, a P99 (99th percentile) of the utilization ratio of the virtual processor of the target virtual machine, and combinations thereof.

Step b, acquiring an expected utilization ratio of a virtual processor of a virtual machine matching the deployment attribute information of the virtual machine according to the usage information of the virtual processor of the target virtual machine.

In some embodiments, the usage information includes one usage indicator, such as: the average utilization ratio of the virtual processor of the target virtual machine, the P50 of the utilization ratio of the virtual processor of the target virtual machine, or the P90 of the utilization ratio of the virtual processor of the target virtual machine. The acquiring the expected utilization ratio of the virtual processor of the virtual machine matching the deployment attribute information of the virtual machine according to the usage information of the virtual processor of the target virtual machine includes: determining an indicator used to describe the utilization ratio of the virtual processor in the usage information as the expected utilization ratio of the virtual processor of the virtual machine matching the deployment attribute information of the virtual machine.

In some embodiments, the usage information includes an average utilization ratio, a first utilization ratio, and a second utilization ratio of the virtual processor.

The first utilization ratio and the second utilization ratio are a first percentile and a second percentile of the utilization ratio of the virtual processor of the target virtual machine, respectively; and the first percentile is less than the second percentile.

The percentile is an indicator used to count and describe the distribution position of data, for example, ranking a set of data from smallest to largest, and determining the value at a specific percentage position. For example, the 25th percentile (P25) represents that 25% of the data is less than or equal to this value; and the 75th percentile (P75) represents that 75% of the data is less than or equal to this value.

In some embodiments, the first percentile and the second percentile are P90 (the 90th percentile) and P99 (the 99th percentile), respectively.

In the case that the usage information includes the average utilization ratio, the first utilization ratio, and the second utilization ratio of the virtual processor, the acquiring the expected utilization ratio of the virtual processor of the virtual machine matching the deployment attribute information of the virtual machine according to the usage information of the virtual processor of the target virtual machine includes the following steps b1 to b3:

Step b1, calculating a difference between the first utilization ratio and the average utilization ratio to acquire a first load amplitude.

Exemplarily, the first percentile is 80%, and the average utilization ratio is 43%, then the first load amplitude is 37%.

Step b2, calculating a difference between the second utilization ratio and the average utilization ratio to acquire a second load amplitude.

Exemplarily, the second percentile is 87%, and the average utilization ratio is 43%, then the second load amplitude is 44%.

Step b3, according to the first load amplitude and the second load amplitude, acquiring the expected utilization ratio of the virtual processor of the virtual machine matching the deployment attribute information of the virtual machine, based on the average utilization ratio or the first utilization ratio or the second utilization ratio.

In some embodiments, the according to the first load amplitude and the second load amplitude, acquiring the expected utilization ratio of the virtual processor of the virtual machine matching the deployment attribute information of the virtual machine based on the average utilization ratio or the first utilization ratio or the second utilization ratio includes the following steps b31 to b33:

Step b31, acquiring, in response to that the second load amplitude is less than or equal to a preset threshold, the expected utilization ratio of the virtual processor of the virtual machine matching the deployment attribute information of the virtual machine based on the first utilization ratio.

Step b32, acquiring, in response to that the second load amplitude is greater than the preset threshold and the first load amplitude is less than or equal to the preset threshold, the expected utilization ratio of the virtual processor of the virtual machine matching the deployment attribute information of the virtual machine based on the first utilization ratio.

Step b33, acquiring, in response to that the first load amplitude is greater than the preset threshold, the expected utilization ratio of the virtual processor of the virtual machine matching the deployment attribute information of the virtual machine based on the second utilization ratio.

Because the first percentile is less than the second percentile, the first load amplitude and the second load amplitude are differences between the first percentile and the average utilization ratio and between the second percentile and the average utilization ratio, respectively, the second load amplitude is greater than the first load amplitude. If the second load amplitude is less than or equal to the preset threshold, the first load amplitude is less than the preset threshold. If the first load amplitude is greater than the preset threshold, both the first load amplitude and the second load amplitude are greater than the preset threshold.

In the case that the load fluctuation of the virtual processor conforms to a Gaussian distribution, the load fluctuation of the virtual processor should satisfy a normal distribution with an expectation $\mu$ being the average utilization ratio and a variance being $\sigma^2$, which is recorded as $N(\mu,\sigma^2)$, and then the preset threshold may be determined according to a standard deviation $\sigma$.

For example, if the load conditions of the virtual processors of all virtual machines are counted, and if 1 standard deviation is 0.093 and 2 standard deviations are 0.247, the preset threshold may be set to 0.093 or 0.247.

In other embodiments, in order to facilitate subsequent calculations, the standard deviation $\sigma$ may also be rounded to a preset number of digits to obtain the preset threshold. For example, if 1 standard deviation is 0.093 and 2 standard deviations are 0.247, the preset threshold may be set to 0.1 or 0.25.

In some embodiments, the acquiring the expected utilization ratio of the virtual processor of the virtual machine matching the deployment attribute information of the virtual machine based on the average utilization ratio includes: determining the average utilization ratio as the expected utilization ratio of the virtual processor of the virtual machine matching the deployment attribute information of the virtual machine; the acquiring the expected utilization ratio of the virtual processor of the virtual machine matching the deployment attribute information of the virtual machine based on the first utilization ratio includes: determining the first utilization ratio as the expected utilization ratio of the virtual processor of the virtual machine matching the deployment attribute information of the virtual machine; and the acquiring the expected utilization ratio of the virtual processor of the virtual machine matching the deployment attribute information of the virtual machine based on the second utilization ratio includes: determining the second utilization ratio as the expected utilization ratio of the virtual processor of the virtual machine matching the deployment attribute information of the virtual machine. That is, the first load amplitude is represented as Amplitude1, the second load amplitude is represented as Amplitude2, the average utilization ratio is represented as Pavg, the first utilization ratio is represented as Pm, the second utilization ratio is represented as Pn, the preset threshold is represented as σ, and the expected utilization ratio is represented as Pexpect, then:

$$Pexpect = \begin{cases} Pavg & Amplitude2 \leq \sigma \\ Pm & Amplitude1 \leq \sigma < Amplitude2 \\ Pn & Amplitude1 > \sigma \end{cases}$$

In some embodiments, the acquiring the expected utilization ratio of the virtual processor of the virtual machine matching the deployment attribute information of the virtual machine based on the average utilization ratio includes: rounding the average utilization ratio up to one decimal place, to acquire the expected utilization ratio of the virtual processor of the virtual machine matching the deployment attribute information of the virtual machine. The acquiring the expected utilization ratio of the virtual processor of the virtual machine matching the deployment attribute information of the virtual machine based on the first utilization ratio includes: rounding the first utilization ratio up to one decimal place, to acquire the expected utilization ratio of the virtual processor of the virtual machine matching the deployment attribute information of the virtual machine. The acquiring the expected utilization ratio of the virtual processor of the virtual machine matching the deployment attribute information of the virtual machine based on the second utilization ratio includes: rounding the second utilization ratio up to one decimal place, to acquire the expected utilization ratio of the virtual processor of the virtual machine matching the deployment attribute information of the virtual machine.

For example, the average utilization ratio is 43%, the first utilization ratio is 80%, and the second utilization ratio is 87%, in the case that the second load amplitude is less than or equal to the preset threshold, the expected utilization ratio is determined to be 50%; in the case that the second load amplitude is greater than the preset threshold, and the first load amplitude is less than or equal to the preset threshold, the expected utilization ratio is determined to be 80%; and in the case that the first load amplitude is greater than the preset threshold, the expected utilization ratio is determined to be 90%.

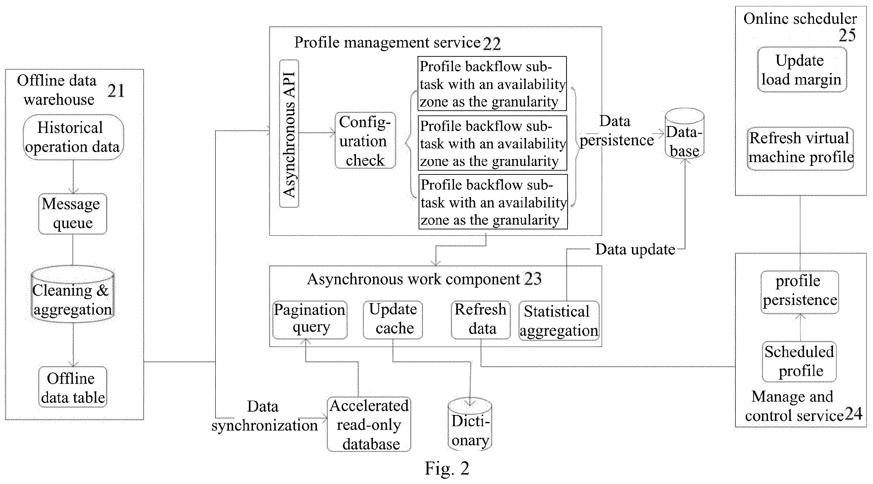

Referring to Fig. 2, Fig. 2 is a schematic diagram of a production link of a virtual machine profile in some embodiments. As shown in Fig. 2, the production link of the virtual machine profile includes: an offline data warehouse 21, a profile management service 22, an asynchronous working component 23, a management and control service 24, and an online scheduler 25. The functions of the offline data warehouse 21 include: 1) acquiring historical operation data of the virtual machines on the cloud service platform, acquiring deployment attribute information and resource consumption information corresponding to the virtual machines according to the historical operation data, and writing the deployment attribute information and the resource consumption information corresponding to the virtual machines into a message queue; 2) performing preprocessing operations such as data cleaning and aggregation on the deployment attribute information and the resource consumption information corresponding to the virtual machines saved in the message queue, and writing the data after the preprocessing operations into an offline data table; and 3) writing the deployment attribute information and the resource consumption information corresponding to the virtual machines that have been preprocessed into an acceleration read-only library. The functions of the profile management service 22 include: 1) reading profile data for generating the virtual machine profile from the offline data warehouse 21 through an asynchronous application programming interface (API); 2) generating the virtual machine profile in units of availability zones distributed by the online scheduler, and starting a profile backflow sub-task with the availability zone as the granularity; 3) persisting the virtual machine profile into a database. The functions of the asynchronous working component 23 include: 1) acquiring corresponding profile data from the acceleration read-only library for each profile backflow sub-task; 2) invoking an operation and maintenance interface (Ops API) of the scheduler to backflow the latest virtual machine profile into a cache of the scheduler for the scheduler to use; and 3) counting and summarizing the virtual machine profiles in the database and updating the virtual machine profiles according to the results of the virtual machine profiles. The functions of the management and control service 24 include: 1) invoking the virtual machine profile from the asynchronous working component 23 through the operation and maintenance interface for the scheduler to use; and 2) performing data persistence processing on the virtual machine profile. The main functions of the online scheduler 25 include: 1) refreshing the cached virtual machine profile and scheduling the virtual machines according to the virtual machine profile; and 2) updating the load margin of the host.

S13, scheduling the to-be-scheduled virtual machine according to the resource consumption information in the target virtual machine profile.

In some embodiments, the scheduling the to-be-scheduled virtual machine according to the resource consumption information in the target virtual machine profile includes the following steps 1 to 3:

Step 1, acquiring an expected resource consumption of the to-be-scheduled virtual machine according to the resource consumption information in the target virtual machine profile.

That is, the resource consumption information of the target virtual machine profile is used as the resource consumption information of the to-be-scheduled virtual machine, and the expected resource consumption of the to-be-scheduled virtual machine is calculated according to the resource consumption information of the to-be-scheduled virtual machine.

In some embodiments, the at least one resource includes a virtual processor, and the acquiring the expected resource consumption of the to-be-scheduled virtual machine according to the resource consumption information in the target virtual machine profile includes: acquiring an expected virtual processor utilization ratio of the to-be-scheduled virtual machine according to the resource consumption information in the target virtual machine profile; and acquiring an expected virtual processor consumption of the to-be-scheduled virtual machine according to the number of the virtual processors of the to-be-scheduled virtual machine and the expected virtual processor utilization ratio of the to-be-scheduled virtual machine.

For example, in the case that the number of the virtual processors of the virtual machine is 4 and the expected virtual processor utilization ratio of the to-be-scheduled virtual machine acquired according to the resource consumption information in the target virtual machine profile is 80%, the virtual processor consumption of the to-be-scheduled virtual machine is: 4*80%=3.2.

Step 2, acquiring a resource remaining quantity of each host in a host cluster of the cloud service platform.

The resource remaining quantity includes a quantity of the at least one resource that is idle on the host.

Step 3, scheduling the to-be-scheduled virtual machine to a target host, a resource remaining quantity of the target host being greater than or equal to the expected resource consumption in the host cluster.

The resource scheduling method based on a cloud service platform provided by the embodiment of the present disclosure includes: firstly acquiring deployment attribute information of a to-be-scheduled virtual machine that is applied for deployment by a tenant on a cloud service platform, then acquiring a target virtual machine profile matching the deployment attribute information of the to-be-scheduled virtual machine from a virtual machine profile set of the cloud service platform, and scheduling the to-be-scheduled virtual machine according to resource consumption information in the target virtual machine profile. Because the embodiment of the present disclosure can generate multiple virtual machine profiles based on historical operation data of virtual machines on the cloud service platform, and the virtual machine profile is used to describe deployment attribute information and resource consumption information corresponding to a virtual machine, and the resource consumption information is used to describe an expected consumption of at least one resource of a virtual machine matching the deployment attribute information of the virtual machine, the present disclosure can acquire an expected resource consumption of the to-be-scheduled virtual machine according to the resource consumption information in the target virtual machine profile, and schedule the to-be-scheduled virtual machine according to the expected resource consumption of the to-be-scheduled virtual machine. Thus, in the embodiment of the present disclosure, virtual machines with high resource requirements can be avoided to be scheduled to the same host, thereby improving resource scheduling, improving resource utilization ratio, and reducing resource costs, so as to meet the resource requirements of multiple tenants while reducing resource contention among multiple tenants.

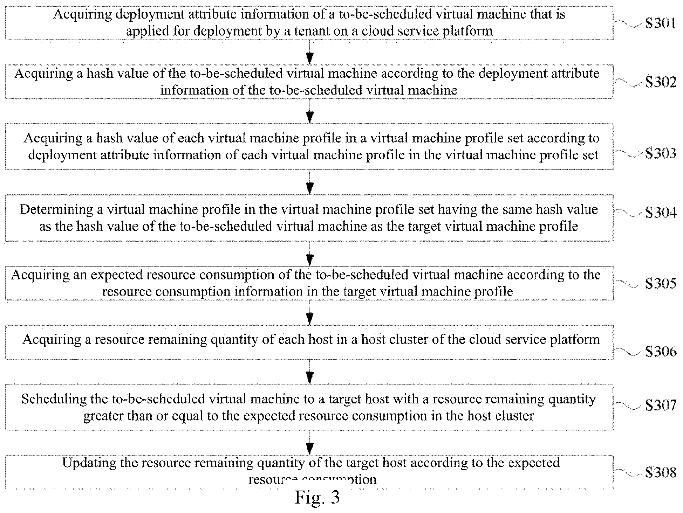

As an expansion and refinement of the above embodiment, an embodiment of the present disclosure provides another resource scheduling method based on a cloud service platform. As shown in Fig. 3, the resource scheduling method based on the cloud service platform includes the following steps:

S301, acquiring deployment attribute information of a to-be-scheduled virtual machine that is applied for deployment by a tenant on a cloud service platform.

Exemplarily, the deployment attribute information of the to-be-scheduled virtual machine may be as follows:

```
"Instance ID": "i-yetes8xkw0cva4f6rm15",
"Region": "AA-BB",
"Availability Zone": "AA-BB-CC",
"Instance Type": "ecs.glie.21xlarge",
"Account ID": " 2100325045 ",
"Instance Name": "render-84-bj".
```

S302, acquiring a hash value of the to-be-scheduled virtual machine according to the deployment attribute information of the to-be-scheduled virtual machine.

Assuming that the hash value of the to-be-scheduled virtual machine is CubeHash, then:

$$CubeHash = Hash(\, AA - BB - CC + 2100325045$$

$$+ \, ecs.\, g1ie.\, 21xlarge \, + render - 84 - bj)$$

In some embodiments, before acquiring the hash value of the to-be-scheduled virtual machine according to the deployment attribute information of the to-be-scheduled virtual machine, the resource scheduling method based on the cloud service platform further includes: blurring the deployment attribute information of the to-be-scheduled virtual machine.

In some embodiments, the blurring the deployment attribute information of the to-be-scheduled virtual machine includes: extracting features from the deployment attribute information in each dimension based on a regular expression corresponding to the deployment attribute information in each dimension.

For example, feature extraction can be performed on the instance name through a regular expression corresponding to the instance name, so as to obtain a feature item "render-%-bj" corresponding to the instance name.

In the above embodiment, the deployment attribute information of the to-be-scheduled virtual machine is blurred before the hash value of the to-be-scheduled virtual machine is acquired according to the deployment attribute information of the to-be-scheduled virtual machine. Thus, the above embodiments can avoid the mismatch between virtual machines with very similar deployment attribute information and virtual machine profiles due to minor differences in deployment attribute information.

S303, acquiring a hash value of each virtual machine profile in a virtual machine profile set according to deployment attribute information of each virtual machine profile in the virtual machine profile set.

In some embodiments, the hash value of each virtual machine profile may be calculated and saved according to the deployment attribute information of each virtual machine profile in advance, and in the case that the hash value of each virtual machine profile needs to be acquired, the hash value of each virtual machine profile that is pre-saved is directly read.

For the implementation of calculating the hash value of each virtual machine profile according to the deployment attribute information of each virtual machine profile, reference may be made to the implementation of acquiring the hash value of the to-be-scheduled virtual machine according to the deployment attribute information of the to-be-scheduled virtual machine, which will not be described in detail here to avoid repetition.

Similarly, before acquiring the hash value of the to-be-scheduled virtual machine according to the deployment attribute information of the to-be-scheduled virtual machine, the resource scheduling method based on the cloud service platform further includes: blurring the deployment attribute information of the virtual machine profile.

S304, determining a virtual machine profile in the virtual machine profile set having the same hash value as the hash value of the to-be-scheduled virtual machine as the target virtual machine profile.

That is, determining whether there is a virtual machine profile that has a hash value same as the hash value of the to-be-scheduled virtual machine, and if yes, determining the virtual machine profile that has the same hash value as the hash value of the to-be-scheduled virtual machine as the target virtual machine profile.

S305, acquiring an expected resource consumption of the to-be-scheduled virtual machine according to the resource consumption information in the target virtual machine profile.

In some embodiments, the at least one resource includes a virtual processor, and the acquiring the expected resource consumption of the to-be-scheduled virtual machine according to the resource consumption information in the target virtual machine profile includes: acquiring an expected virtual processor utilization ratio of the to-be-scheduled virtual machine according to the resource consumption information in the target virtual machine profile; and acquiring an expected virtual processor consumption of the to-be-scheduled virtual machine according to the number of virtual processors of the to-be-scheduled virtual machine and the expected virtual processor utilization ratio of the to-be-scheduled virtual machine.

For example, the expected virtual processor utilization ratio of the to-be-scheduled virtual machine is 50%, and the number of virtual processors of the to-be-scheduled virtual machine is 6, then the expected virtual processor consumption of the to-be-scheduled virtual machine is 50%*6=3.

S306, acquiring a resource remaining quantity of each host in a host cluster of the cloud service platform.

The resource remaining quantity includes a quantity of the at least one resource that is idle on the host.

In some embodiments, in the case that the at least one resource includes the virtual processor, before acquiring the resource remaining quantity of each host in the host cluster of the cloud service platform, the resource scheduling method based on the cloud service platform further includes: acquiring a total quantity of available virtual processor loads of each host in the host cluster, acquiring a total number of available virtual processors of each host in the host cluster according to the number of virtual processors of each host in the host cluster and a preset virtual processor utilization ratio, and acquiring an initial value of remaining quantity of virtual processors of each host in the host cluster according to the total number of available virtual processors of each host in the host cluster.

In a scenario of load peak shaving scheduling, if there are two virtual processors on the host and a utilization ratio of one virtual processor is n%, it is desirable that a utilization ratio of another virtual processor does not exceed 100%-n%, so that the two virtual processors can be used for load off-peak scheduling, thereby avoiding all the virtual processors being in a high load mode and eliminating a failure risk. Thus, an average utilization ratio of the virtual processors of the host can be set to not exceed 55%, and therefore, in the embodiment of the present disclosure, the preset virtual processor utilization ratio can be set to 55%. A calculation formula of the total quantity of available virtual processor loads of the host can be:

$$CPU\_load_{host} = vcpu\_count_{host} * \frac{1.1 * A}{2}$$

where $CPU\_load_{host}$ is the total quantity of available virtual processor loads of the host, $vcpu\_count_{host}$ is the number of virtual processors of the host, $A$ is an adjustment coefficient, and in practical use, the value of $A$ can be adjusted according to the scenario, thereby adjusting the total quantity of available virtual processor loads of the host.

Exemplarily, the calculation process of the resource remaining quantity of the host is described below by taking an example where the number of virtual processors of the host is $vcpu\_count_{host}$ = 64, the adjustment coefficient is A = 1, three virtual machines have been deployed on the host, the first virtual machine has 32 virtual processors and an expected virtual processor utilization ratio of 80%, the second virtual machine has 16 virtual processors and an expected virtual processor utilization ratio of 30%, and the third virtual machine has 8 virtual processors and an expected virtual processor utilization ratio of 20%.

First, the total quantity of available virtual processor loads of the host is calculated according to the number of virtual processors of the host and the adjustment coefficient.

By substituting $vcpu\_count_{host}$ = 64 and $A$ = 1 into the above calculation formula of the total quantity of available virtual processor loads of the host, $CPU\_load_{host}$ = 35.2 can be obtained.

Secondly, the virtual processor consumption of the three virtual machines is calculated according to the number of virtual processors and the expected virtual processor utilization ratio of the three virtual machines, respectively.

According to 32 virtual processors and an expected virtual processor utilization ratio of 80%, the virtual processor consumption of the first virtual machine is 32*0.8=25.6.

According to 16 virtual processors and an expected virtual processor utilization ratio of 30%, the virtual processor consumption of the second virtual machine is 16*0.3=4.8.

According to 8 virtual processors and an expected virtual processor utilization ratio of 20%, the virtual processor consumption of the third virtual machine is 8*0.2=1.6.

Finally, the virtual processor margin of the host is obtained by subtracting the virtual processor consumption of the virtual machines deployed on the host from the total quantity of available virtual processor loads of the host.

The total quantity of available virtual processor loads of the host is 35.2, and the virtual processor consumption of the three virtual machines deployed on the host are 25.6, 4.8, and 1.6, respectively. Thus, the virtual processor margin of the host is 35.2-25.6-4.8-1.6=3.2.

S307, scheduling the to-be-scheduled virtual machine to a target host with a resource remaining quantity greater than or equal to the expected resource consumption in the host cluster.

In some embodiments, the scheduling the to-be-scheduled virtual machine to the target host with the resource remaining quantity greater than or equal to the expected resource consumption in the host cluster includes:
scheduling the to-be-scheduled virtual machine to a host with a resource remaining quantity greater than or equal to the expected resource consumption and with a closest resource remaining quantity to the expected resource consumption of the to-be-scheduled virtual machine.

In some embodiments, the scheduling the to-be-scheduled virtual machine to the target host with the resource remaining quantity greater than or equal to the expected resource consumption in the host cluster includes: scheduling the to-be-scheduled virtual machine to a host with a largest resource remaining quantity in the host cluster.

S308, updating the resource remaining quantity of the target host according as the expected resource consumption.

In some embodiments, the updating the resource remaining quantity of the target host according to the expected resource consumption includes: updating the resource remaining quantity of the target host as a difference between the resource remaining quantity of the target host and the expected resource consumption.

For example, the virtual processor margin of the target host is 16.8, and the expected virtual processor consumption of the to-be-scheduled virtual machine is 4.6, then the virtual processor margin of the target host is updated as 16.8-4.6=12.2.

After the virtual machine is scheduled to the host every time, the resource remaining quantity of the target host is updated according to the expected resource consumption of the virtual machine, which can be directly read when the resource remaining quantity of the host needs to be acquired, without calculating the resource remaining quantity of the host again according to the total available resource quantity of the host and the resource consumption of the virtual machines deployed on the host, thereby improving the efficiency of acquiring the resource remaining quantity of the host.

Based on the same inventive concept, as an implementation of the above method, an embodiment of the present disclosure further provides a resource scheduling apparatus based on a cloud service platform. This embodiment corresponds to the foregoing method embodiments. For ease of reading, the details in the foregoing method embodiments will not be repeated in this embodiment, but it should be clear that the resource scheduling apparatus based on a cloud service platform in this embodiment can correspondingly implement all the content in the foregoing method embodiments.

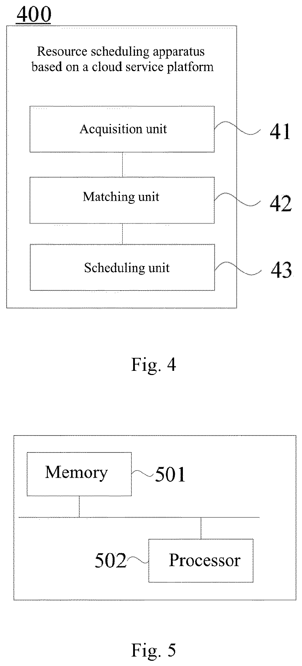

An embodiment of the present disclosure provides a resource scheduling apparatus based on a cloud service platform. Fig. 4 is a schematic structural diagram of the resource scheduling apparatus based on a cloud service platform. As shown in Fig. 4, the resource scheduling apparatus 400 based on a cloud service platform includes:

an acquisition unit 41, configured to acquire deployment attribute information of a to-be-scheduled virtual machine that is applied for deployment by a tenant on a cloud service platform;

a matching unit 42, configured to acquire a target virtual machine profile matching the deployment attribute information of the to-be-scheduled virtual machine from a virtual machine profile set of the cloud service platform; the virtual machine profile set includes multiple virtual machine profiles generated based on historical operation data of virtual machines on the cloud service platform; the virtual machine profile is used to describe deployment attribute information and resource consumption information corresponding to a virtual machine; the resource consumption information is used to describe an expected consumption of at least one resource of a virtual machine matching the deployment attribute information of the virtual machine; and

a scheduling unit 43, configured to schedule the to-be-scheduled virtual machine according to resource consumption information in the target virtual machine profile.

As an optional implementation of the embodiment of the present disclosure, the scheduling unit 43 is further configured to: acquire an expected resource consumption of the to-be-scheduled virtual machine according to the resource consumption information in the target virtual machine profile; acquire a resource remaining quantity of each host in a host cluster of the cloud service platform, the resource remaining quantity includes a quantity of the at least one resource that is idle on the host; and schedule the to-be-scheduled virtual machine to a target host with a resource remaining quantity of the target host being greater than or equal to the expected resource consumption in the host cluster.

As an optional implementation of the embodiment of the present disclosure, the scheduling unit 43 is further configured to: update the resource remaining quantity of the target host according to the expected resource consumption, after scheduling the to-be-scheduled virtual machine to the target host with the resource remaining quantity of the target host being greater than or equal to the expected resource consumption in the host cluster.

As an optional implementation of the embodiment of the present disclosure, the at least one resource includes a virtual processor, and the matching unit 42 is further configured to: acquire usage information of a virtual processor of a target virtual machine from the historical operation data; acquire an expected utilization ratio of a virtual processor of a virtual machine matching the deployment attribute information of the virtual machine according to the usage information of the virtual processor of the target virtual machine; and generate the target virtual machine profile according to the expected utilization ratio of the virtual processor of the virtual machine matching the deployment attribute information of the virtual machine.

As an optional implementation of the embodiment of the present disclosure, the target virtual machine is a virtual machine matching the deployment attribute information of the to-be-scheduled virtual machine, and the usage information includes at least one indicator used to describe a utilization ratio of the virtual processor.

As an optional implementation of the embodiment of the present disclosure, the usage information includes an average utilization ratio, a first utilization ratio, and a second utilization ratio of the virtual processor; the first utilization ratio and the second utilization ratio are a first percentile and a second percentile of the utilization ratio of the virtual processor of the target virtual machine, respectively; and the first percentile is less than the second percentile.

As an optional implementation of the embodiment of the present disclosure, the matching unit 42 is further configured to: calculate a difference between the first utilization ratio and the average utilization ratio to acquire a first load amplitude; calculate a difference between the second utilization ratio and the average utilization ratio to acquire a second load amplitude; and according to the first load amplitude and the second load amplitude, acquire the expected utilization ratio of the virtual processor of the virtual machine matching the deployment attribute information of the virtual machine based on the average utilization ratio or the first utilization ratio or the second utilization ratio.

As an optional implementation of the embodiment of the present disclosure, the matching unit 42 is further configured to: acquire, in response to that the second load amplitude is less than or equal to a preset threshold, the expected utilization ratio of the virtual processor of the virtual machine matching the deployment attribute information of the virtual machine based on the average utilization ratio; acquire, in response to that the second load amplitude is greater than the preset threshold and the first load amplitude is less than or equal to the preset threshold, the expected utilization ratio of the virtual processor of the virtual machine matching the deployment attribute information of the virtual machine based on the first utilization ratio; and acquire, in response to that the first load amplitude is greater than the preset threshold, the expected utilization ratio of the virtual processor of the virtual machine matching the deployment attribute information of the virtual machine based on the second utilization ratio.

As an optional implementation of the embodiment of the present disclosure, the scheduling unit 43 is further configured to: acquire an expected virtual processor utilization ratio of the to-be-scheduled virtual machine according to the resource consumption information in the target virtual machine profile; and acquire an expected virtual processor consumption of the to-be-scheduled virtual machine according to the number of virtual processors of the to-be-scheduled virtual machine and the expected virtual processor utilization ratio of the to-be-scheduled virtual machine.

As an optional implementation of the embodiment of the present disclosure, the at least one resource includes a virtual processor, and the scheduling unit 43 is further configured to: acquire the number of virtual processors of each host in the host cluster of the cloud service platform before acquiring the resource remaining quantity of each host in the host cluster of the cloud service platform; acquire the total number of available virtual processors of each host in the host cluster according to the number of virtual processors of each host in the host cluster and a preset virtual processor utilization ratio; and acquire the initial value of the virtual processor remaining quantity of each host in the host cluster according to the total number of available virtual processors of each host in the host cluster.

As an optional implementation of the embodiment of the present disclosure, the matching unit 42 is further configured to: acquire a hash value of the to-be-scheduled virtual machine according to the deployment attribute information of the to-be-scheduled virtual machine; acquire the hash value of each virtual machine profile in the virtual machine profile set according to the deployment attribute information of each virtual machine profile in the virtual machine profile set; and determine a virtual machine profile, having the same hash value as the hash value of the to-be-scheduled virtual machine, in the virtual machine profile set as the target virtual machine profile.

As an optional implementation of the embodiment of the present disclosure, the matching unit 42 is further configured to: before acquiring the hash value of the to-be-scheduled virtual machine according to the deployment attribute information of the to-be-scheduled virtual machine, blur the deployment attribute information of the to-be-scheduled virtual machine; and before acquiring the hash value of each virtual machine profile in the virtual machine profile set according to the deployment attribute information of each virtual machine profile in the virtual machine profile set, blur the deployment attribute information of each virtual machine profile in the virtual machine profile set.

The resource scheduling apparatus based on a cloud service platform provided by the embodiment of the present disclosure can perform the resource scheduling method based on the cloud service platform provided by any one of the above embodiments, and the implementation principles and technical effects thereof are similar, which will not be repeated here.

Based on the same inventive concept, an embodiment of the present disclosure further provides an electronic device. Fig. 5 is a schematic structural diagram of an electronic device provided by an embodiment of the present disclosure. As shown in Fig. 5, the electronic device provided by this embodiment includes: a memory 501 and a processor 502, the memory 501 is configured to store a computer program, and the processor 502 is configured to, when executing the computer program, perform the resource scheduling method based on a cloud service platform provided by any one of the above embodiments.

Based on the same inventive concept, an embodiment of the present disclosure further provides a non-transitory computer-readable storage medium, on which a computer program is stored, when the computer program is executed by a processor, the non-transitory computer-readable storage medium is caused to implement any one of the above resource scheduling methods based on the cloud service platform provided by the above embodiments.

Based on the same inventive concept, an embodiment of the present disclosure further provides a computer program product, and when the computer program product runs on a computer, the electronic device is caused to implement any one of the above resource scheduling methods based on the cloud service platform provided by the above embodiments.

Those skilled in the art should understand that the embodiments of the present disclosure can be provided as a method, system, or computer program product. Thus, the present disclosure can be implemented in the form of a complete hardware embodiment, a complete software embodiment, or a combination of software and hardware aspects. Moreover, the present disclosure can be implemented in the form of a computer program product implemented on one or more computer-readable storage media including computer-usable program code.

The processor may be a central processing unit (Central Processing Unit, CPU), or may be other general-purpose processors, digital signal processors (Digital Signal Processor, DSP), application specific integrated circuits (Application Specific Integrated Circuit, ASIC), field-programmable gate arrays (Field-Programmable Gate Array, FPGA), or other programmable logic devices, discrete gate or transistor logic devices, discrete hardware components, and the like. The general-purpose processor may be a microprocessor or the processor may also be any conventional processor or the like.

The memory may include non-permanent memory in a computer-readable storage medium, random access memory (RAM) and/or non-volatile memory, such as read-only memory (ROM) or flash RAM. The memory is an example of a computer-readable storage medium.

The computer-readable storage medium includes permanent and non-permanent, removable and non-removable storage media. The storage medium may implement information storage by any method or technology, and the information may be computer-readable instructions, data structures, program modules, or other data. Examples of the computer storage medium include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, digital versatile disc (DVD) or other optical storage, magnetic cassettes, magnetic disk storage or other magnetic storage devices or any other non-transmission medium, which can be used to store information that can be accessed by the computing device. According to the definition in this article, the computer-readable storage medium does not include transitory media, such as a modulated data signal and a carrier.

Finally, it should be noted that the above embodiments are only used to illustrate the technical solutions of the present disclosure, rather than to limit them. Although the present disclosure has been described in detail with reference to the foregoing embodiments, those of ordinary skill in the art should understand that they can still modify the technical solutions described in the foregoing embodiments, or equivalently replace some or all of the technical features. These modifications or replacements do not make the essence of the corresponding technical solutions deviate from the scope of the technical solutions of the embodiments of the present disclosure.

**Claims**

1. A resource scheduling method based on a cloud service platform, comprising:

   acquiring deployment attribute information of a to-be-scheduled virtual machine applied for deployment by a tenant on the cloud service platform (S11);
   acquiring a target virtual machine profile matching the deployment attribute information of the to-be-scheduled virtual machine from a virtual machine profile set of the cloud service platform, wherein the virtual machine profile set comprises a plurality of virtual machine profiles generated based on historical operation data of virtual machines on the cloud service platform, the virtual machine profile is used to describe deployment attribute information and resource consumption information corresponding to a virtual machine, and the resource consumption information is used to describe an expected consumption of at least one resource of a virtual machine matching the deployment attribute information of the virtual machine (S12); and
   scheduling the to-be-scheduled virtual machine according to the resource consumption information in the target virtual machine profile (S13).

2. The method according to claim 1, wherein the scheduling the to-be-scheduled virtual machine according to the resource consumption information in the target virtual machine profile (S13) comprises:

   acquiring an expected resource consumption of the to-be-scheduled virtual machine according to the resource consumption information in the target virtual machine profile (1; S305);
   acquiring a resource remaining quantity of each host in a host cluster of the cloud service platform, wherein the resource remaining quantity comprises a quantity of the at least one resource that is idle on the host (2; S306); and
   scheduling the to-be-scheduled virtual machine to a target host, a resource remaining quantity of the target host being greater than or equal to the expected resource consumption in the host cluster (3; S307).

3. The method according to claim 2, wherein after the scheduling the to-be-scheduled virtual machine to the target host and the resource remaining quantity of the target host being greater than or equal to the expected resource consumption in the host cluster (3; S307), the method further comprises:
   updating the resource remaining quantity of the target host according to the expected resource consumption (S308).

4. The method according to any one of claims 1 to 3, wherein the at least one resource comprises a virtual processor, and the method further comprises:

   acquiring usage information of a virtual processor of a target virtual machine from the historical operation data, wherein the target virtual machine is a virtual machine matching the deployment attribute information of the to-be-scheduled virtual machine, and the usage information comprises at least one indicator used to describe a utilization ratio of the virtual processor (a);
   acquiring an expected utilization ratio (*Pexpect*) of a virtual processor of a virtual machine matching the deployment attribute information of the virtual machine according to the usage information of the virtual processor of the target virtual machine (b); and

generating the target virtual machine profile according to the expected utilization ratio ($Pexpect$) of the virtual processor of the virtual machine matching the deployment attribute information of the virtual machine (c).

**5.** The method according to claim 4, wherein the usage information comprises an average utilization ratio ($Pavg$), a first utilization ratio ($Pm$), and a second utilization ratio ($Pn$) of the virtual processor, the first utilization ratio ($Pm$) and the second utilization ratio ($Pn$) are a first percentile and a second percentile of the utilization ratio of the virtual processor of the target virtual machine, respectively, and the first percentile is less than the second percentile; and

wherein the acquiring the expected utilization ratio ($Pexpect$) of the virtual processor of the virtual machine matching the deployment attribute information of the virtual machine according to the usage information of the virtual processor of the target virtual machine (b) comprises:

calculating a difference between the first utilization ratio ($Pm$) and the average utilization ratio ($Pavg$) to acquire a first load amplitude ($Amplitude1$) (b1);

calculating a difference between the second utilization ratio ($Pn$) and the average utilization ratio ($Pavg$) to acquire a second load amplitude ($Amplitude2$)(b2); and

according to the first load amplitude ($Amplitude1$) and the second load amplitude ($Amplitude2$), acquiring the expected utilization ratio ($Pexpect$) of the virtual processor of the virtual machine matching the deployment attribute information of the virtual machine based on the average utilization ratio ($Pavg$) or the first utilization ratio ($Pm$) or the second utilization ratio ($Pn$)(b3).

**6.** The method according to claim 5, wherein the according to the first load amplitude ($Amplitude1$) and the second load amplitude ($Amplitude2$), acquiring the expected utilization ratio ($Pexpect$) of the virtual processor of the virtual machine matching the deployment attribute information of the virtual machine based on the average utilization ratio ($Pavg$) or the first utilization ratio ($Pm$) or the second utilization ratio ($Pn$)(b3) comprises:

acquiring, in response to that the second load amplitude ($Amplitude2$) is less than or equal to a preset threshold ($\sigma$), the expected utilization ratio ($Pexpect$) of the virtual processor of the virtual machine matching the deployment attribute information of the virtual machine based on the average utilization ratio ($Pavg$)(b31);

acquiring, in response to that the second load amplitude ($Amplitude2$) is greater than the preset threshold ($\sigma$), and the first load amplitude ($Amplitude1$) is less than or equal to the preset threshold ($\sigma$), acquiring the expected utilization ratio ($Pexpect$) of the virtual processor of the virtual machine matching the deployment attribute information of the virtual machine based on the first utilization ratio (Pm)(b33); and

acquiring, in response to that the first load amplitude ($Amplitude1$) is greater than the preset threshold ($\sigma$), acquiring the expected utilization ratio ($Pexpect$) of the virtual processor of the virtual machine matching the deployment attribute information of the virtual machine based on the second utilization ratio (Pn)(b33).

**7.** The method according to claim 2 or 3, wherein the acquiring the expected resource consumption of the to-be-scheduled virtual machine according to the resource consumption information in the target virtual machine profile(1; S305) comprises:

acquiring an expected virtual processor utilization ratio of the to-be-scheduled virtual machine according to the resource consumption information in the target virtual machine profile; and

acquiring an expected virtual processor consumption of the to-be-scheduled virtual machine according to the number of virtual processors of the to-be-scheduled virtual machine and the expected virtual processor utilization ratio of the to-be-scheduled virtual machine.

**8.** The method according to claim 3, wherein the at least one resource comprises a virtual processor, and before the acquiring the resource remaining quantity of each host in the host cluster of the cloud service platform (2; S306), the method further comprises:

acquiring the number ($vcpu\_count_{host}$) of virtual processors of each host in the host cluster;

acquiring the total number ($vcpu\_count_{host}$) of available virtual processors of each host in the host cluster according to the number ($vcpu\_count_{host}$) of virtual processors of each host in the host cluster and a preset virtual processor utilization ratio; and

acquiring an initial value of the virtual processor remaining quantity of each host in the host cluster according to the total number of available virtual processors of each host in the host cluster.

9. The method according to any one of claims 1 to 8, wherein the acquiring the target virtual machine profile matching the deployment attribute information of the to-be-scheduled virtual machine from the virtual machine profile set of the cloud service platform comprises:

acquiring a hash value of the to-be-scheduled virtual machine according to the deployment attribute information of the to-be-scheduled virtual machine (S302);
acquiring a hash value of each virtual machine profile in the virtual machine profile set according to the deployment attribute information of each virtual machine profile in the virtual machine profile set (S303); and
determining a virtual machine profile, having the same hash value as the hash value of the to-be-scheduled virtual machine, in the virtual machine profile set as the target virtual machine profile (S304).

10. The method according to claim 9, further comprising:

blurring the deployment attribute information of the to-be-scheduled virtual machine, before the acquiring the hash value of the to-be-scheduled virtual machine according to the deployment attribute information of the to-be-scheduled virtual machine; and
blurring the deployment attribute information of each virtual machine profile in the virtual machine profile set, before the acquiring the hash value of each virtual machine profile in the virtual machine profile set according to the deployment attribute information of each virtual machine profile in the virtual machine profile set.

11. An electronic device, comprising:

a memory; and
a processor, wherein the memory is configured to store a computer program, and the processor is configured to, when executing the computer program, cause the electronic device to implement the resource scheduling method based on a cloud service platform according to any one of claims 1 to 9.

12. The electronic device according to claim 11, wherein the scheduling the to-be-scheduled virtual machine according to the resource consumption information in the target virtual machine profile comprises:

acquiring an expected resource consumption of the to-be-scheduled virtual machine according to the resource consumption information in the target virtual machine profile (1; S305);
acquiring a resource remaining quantity of each host in a host cluster of the cloud service platform, wherein the resource remaining quantity comprises a quantity of the at least one resource that is idle on the host (2; S306); and
scheduling the to-be-scheduled virtual machine to a target host, a resource remaining quantity of the target host being greater than or equal to the expected resource consumption in the host cluster (3; S307).

13. The electronic device according to claim 12, wherein after the scheduling the to-be-scheduled virtual machine to the target host and the resource remaining quantity of the target host being greater than or equal to the expected resource consumption in the host cluster (3; S307), the method further comprises:
updating the resource remaining quantity of the target host according to the expected resource consumption (S308).

14. The electronic device according to any one of claims 11 to 13, wherein the at least one resource comprises a virtual processor, and the method further comprises:

acquiring usage information of a virtual processor of a target virtual machine from the historical operation data, wherein the target virtual machine is a virtual machine matching the deployment attribute information of the to-be-scheduled virtual machine, and the usage information comprises at least one indicator used to describe a utilization ratio of the virtual processor (a);
acquiring an expected utilization ratio ($Pexpect$) of a virtual processor of a virtual machine matching the deployment attribute information of the virtual machine according to the usage information of the virtual processor of the target virtual machine (b); and
generating the target virtual machine profile according to the expected utilization ratio ($Pexpect$) of the virtual processor of the virtual machine matching the deployment attribute information of the virtual machine (c).

15. The electronic device according to claim 14, wherein the usage information comprises an average utilization ratio ($Pavg$), a first utilization ratio ($Pm$), and a second utilization ratio ($Pn$) of the virtual processor, the first utilization ratio ($Pm$) and the second utilization ratio ($Pn$) are a first percentile and a second percentile of the utilization ratio of the virtual processor of the target virtual machine, respectively, and the first percentile is less than the second percentile; and

wherein the acquiring the expected utilization ratio (*Pexpect*) of the virtual processor of the virtual machine matching the deployment attribute information of the virtual machine according to the usage information of the virtual processor of the target virtual machine (b) comprises:

calculating a difference between the first utilization ratio (*Pm*) and the average utilization ratio (*Pavg*) to acquire a first load amplitude (*Amplitude*1)(b1);

calculating a difference between the second utilization ratio (*Pn*) and the average utilization ratio (*Pavg*) to acquire a second load amplitude (*Amplitude*2)(b2); and

according to the first load amplitude (*Amplitude*1) and the second load amplitude, acquiring the expected utilization ratio (*Pexpect*) of the virtual processor of the virtual machine matching the deployment attribute information of the virtual machine based on the average utilization ratio (*Pavg*) or the first utilization ratio (*Pm*) or the second utilization ratio (*Pn*)(b3).

Acquiring deployment attribute information of a to-be-scheduled virtual machine — S11

Acquiring a target virtual machine profile matching the deployment attribute in formation of the to-be-scheduled virtual machine from a virtual machine profile set of a cloud service platform — S12

Scheduling the to-be-scheduled virtual machine according to resource consumption information in the target virtual machine profile — S13

Fig. 1

Fig. 2

Offline data warehouse 21
- Historical operation data
- Message queue
- Cleaning & aggregation
- Offline data table

Profile management service 22
- Asynchronous API
- Configuration check
- Profile backflow sub-task with an availability zone as the granularity
- Profile backflow sub-task with an availability zone as the granularity
- Profile backflow sub-task with an availability zone as the granularity

Data persistence — Database

Asynchronous work component 23
- Pagination query
- Update cache
- Refresh data
- Statistical aggregation

Data synchronization — Accelerated read-only database

Dictionary

Data update

Online scheduler 25
- Update load margin
- Refresh virtual machine profile

Manage and control service 24
- profile persistence
- Scheduled profile

EP 4 703 881 A1

Acquiring deployment attribute information of a to-be-scheduled virtual machine that is applied for deployment by a tenant on a cloud service platform ⌇∽ S301

↓

Acquiring a hash value of the to-be-scheduled virtual machine according to the deployment attribute information of the to-be-scheduled virtual machine ⌇∽ S302

↓

Acquiring a hash value of each virtual machine profile in a virtual machine profile set according to deployment attribute information of each virtual machine profile in the virtual machine profile set ⌇∽ S303

↓

Determining a virtual machine profile in the virtual machine profile set having the same hash value as the hash value of the to-be-scheduled virtual machine as the target virtual machine profile ⌇∽ S304

↓

Acquiring an expected resource consumption of the to-be-scheduled virtual machine according to the resource consumption information in the target virtual machine profile ⌇∽ S305

↓

Acquiring a resource remaining quantity of each host in a host cluster of the cloud service platform ⌇∽ S306

↓

Scheduling the to-be-scheduled virtual machine to a target host with a resource remaining quantity greater than or equal to the expected resource consumption in the host cluster ⌇∽ S307

↓

Updating the resource remaining quantity of the target host according to the expected resour⸺ ⸺⸺⸺⸺ption ⌇∽ S308

Fig. 3

400

Resource scheduling apparatus
based on a cloud service platform

Acquisition unit — 41

Matching unit — 42

Scheduling unit — 43

Fig. 4

Memory —501

502— Processor

Fig. 5

Europäisches
Patentamt
European
Patent Office
Office européen
des brevets

## EUROPEAN SEARCH REPORT

**Application Number**

EP 25 17 9538

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HINZ MAURO ET AL: "A Cost Model for IaaS Clouds Based on Virtual Machine Energy Consumption", JOURNAL OF GRID COMPUTING, SPRINGER NETHERLANDS, DORDRECHT, vol. 16, no. 3, 28 May 2018 (2018-05-28), pages 493-512, XP036570456, ISSN: 1570-7873, DOI: 10.1007/S10723-018-9440-8 [retrieved on 2018-05-28] | 1-8, 11-15 | INV. G06F9/50 G06F9/455 G06F8/60 |
| A | * the whole document * | 9,10 | |
| A | US 2021/373925 A1 (HAO QING FENG [CN] ET AL) 2 December 2021 (2021-12-02) * abstract * * paragraphs [0019], [0020] * * figures 2-4 * * paragraph [0027] - paragraph [0040] * * paragraphs [0051], [0052] * | 1-15 | |

| | |
|---|---|
| | **TECHNICAL FIELDS SEARCHED (IPC)** |
| | G06F |

The present search report has been drawn up for all claims

| Place of search | Date of completion of the search | Examiner |
|---|---|---|
| The Hague | 6 November 2025 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 703 881 A1

## ANNEX TO THE EUROPEAN SEARCH REPORT
## ON EUROPEAN PATENT APPLICATION NO.

EP 25 17 9538

06-11-2025

| Patent document cited in search report | Publication date | Patent family member(s) | Publication date |
|---|---|---|---|
| US 2021373925 A1 | 02-12-2021 | NONE | |

EPO FORM P0459

**EP 4 703 881 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411179676